# EUROPEAN PATENT SPECIFICATION

(11) **EP 3 406 583 B1**
(45) Date of publication and mention of the grant of the patent: **14.07.2021**
(21) Application number: 17756656.9
(22) Date of filing: 24.02.2017
(51) Int. Cl.: C04B 37/00, B32B 18/00, C04B 35/581

(54) **CERAMIC BONDED BODY**
KERAMISCHER GEBONDETER KÖRPER
CORPS LIÉ EN CÉRAMIQUE

(30) Priority: 26.02.2016 JP 2016035769
(43) Date of publication of application: 28.11.2018
(73) Proprietor: Kyocera Corporation, Kyoto-shi, Kyoto 612-8501 (JP)
(72) Inventor: NAKAMURA,Kiyotaka, Kyoto-shi Kyoto 612-8501 (JP); MORIYAMA,Masayuki, Kyoto-shi Kyoto 612-8501 (JP)
(74) Representative: Viering, Jentschura & Partner mbB Patent- und Rechtsanwälte
(86) International application number: PCT/JP2017/007163
(87) International publication number: WO 2017/146222

(56) References cited:
- EP-A1- 2 963 002
- EP-A2- 0 836 221
- EP-A2- 0 856 499
- WO-A1-2008/065980
- DE-A1-102015 212 941
- JP-A- H10 167 850
- JP-A- H10 273 370
- JP-A- 2000 114 355
- JP-A- 2006 169 092
- US-A- 3 469 729
- US-A1- 2007 042 203

## Description

### Technical Field

The present disclosure relates to a ceramic bonded body.

### Background Art

An aluminum nitride-based ceramic is excellent in heat conductivity, insulation, corrosion resistance, etc., therefore is being used in a wide range of fields. Further, in recent years, along with the increasing size of apparatuses and equipment provided with members from which such characteristics are demanded, increasing sizes and lengths of the members themselves and, further, more complicated shapes of the members have been demanded. However, it was difficult to integrally form large-sized, long, and complex-shaped members. Therefore, a plurality of sintered bodies have been bonded to each other to deal with the increasing sizes and lengths of the members themselves and more complicated shapes of the members.

For example, Patent Literature 1 proposes bonding a plurality of members comprised of aluminum nitride-based ceramic by using a binder containing a flux comprised of a composition consisting of CaO: 25 to 45 wt%, Y₂O₃: 5 to 30 wt%, and a balance of Al₂O₃ and an aluminum nitride-based ceramic.

### Citation List

### Patent Literature

Patent Literature 1: Japanese Patent Publication No. 2004-345952A

EP0836221 A2 discloses a method of joining aluminum nitride-series substrates to each other in the substantial absence of an intervening third layer at the joining interface between the substrates. In the method, the aluminium nitride-series substrates are joined to each other by interposing a joining agent between the substrates, heating the substrates and the joining agent to a first temperature range of at least the melting point of the joining agent to melt the joining agent and liquefy particles of the aluminum nitride at the neighborhood of the interfaces between the melted joining agent and the substrates to a temperature range higher than the temperature range of the first process but lower than the melting point of the substrates to exhaust the joining agent from between the substrates.

US2007/042203 A1 discloses a corrosion-resistant member, in which at least a portion thereof exposed to a corrosive environment is formed of a corrosion-resistant material that contains calcium oxide and aluminum oxide, and of calcium aluminum oxide, in which a rare earth element is less than 5 wt %.

### Summary of Invention

A ceramic bonded body of the present disclosure is provided with a first member, a second member, a joining layer between the first member and the second member, and a covering layer which covers the joining layer and is located over the first member and the second member. Further, the first member and the second member are comprised of aluminum nitride-based ceramic. Further, the joining layer and the covering layer contain at least aluminum, calcium, yttrium, and oxygen. In 100 mass% of all of the constituents configuring the joining layer and the covering layer, the aluminum is 21 mass% or more converted to oxides, the calcium is 21 mass% or more converted to oxides, and the sum of the aluminum and the calcium converted to oxides is 86 mass% or more. Further, the covering layer has a content of yttrium converted to oxides larger than that of the joining layer.

### Brief Description of Drawings

FIG. 1 is a perspective view showing an example of a ceramic bonded body in the present disclosure.
FIG. 2 is a cross-sectional view of the ceramic bonded body shown in FIG. 1.
FIG. 3 is a perspective view showing another example of the ceramic bonded body in the present disclosure.
FIG. 4 is a cross-sectional view of the ceramic bonded body shown in FIG. 3.
FIG. 5 is an enlarged view of an S-portion shown in FIG. 2.
FIG. 6 is an enlarged view of a T-portion shown in FIG. 4.

### Description of Embodiments

In recent years, ceramic bonded bodies have been used in parts exposed to environments using corrosive gases etc. For this reason, ceramic bonded bodies have been demanded to have excellent durability and corrosion resistance so that the drop in joining strength of the joined parts is small and use over a long period of time becomes possible even in an environment where corrosive gases etc. are used.

The ceramic bonded body of the present disclosure has excellent durability and corrosion resistance when used in an environment where it is exposed to corrosive gases or the like. Below, the ceramic bonded body of the present disclosure will be explained in detail with reference to the drawings.

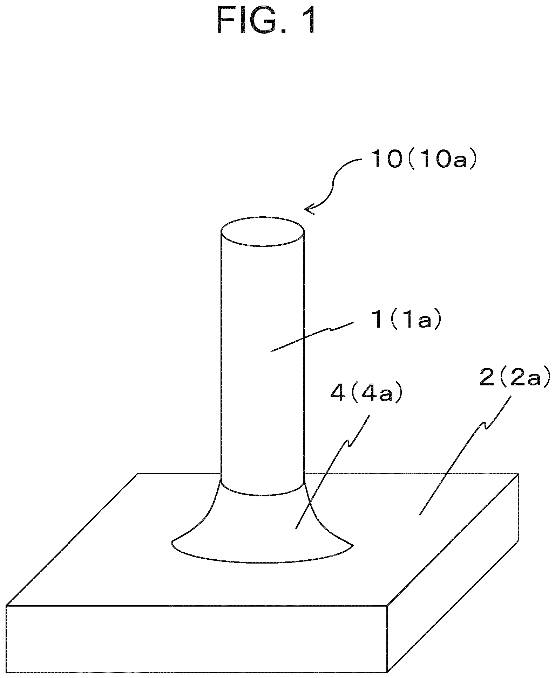

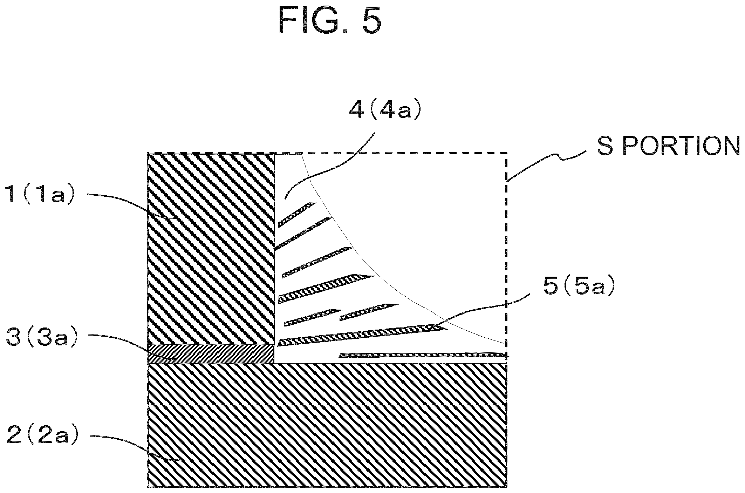

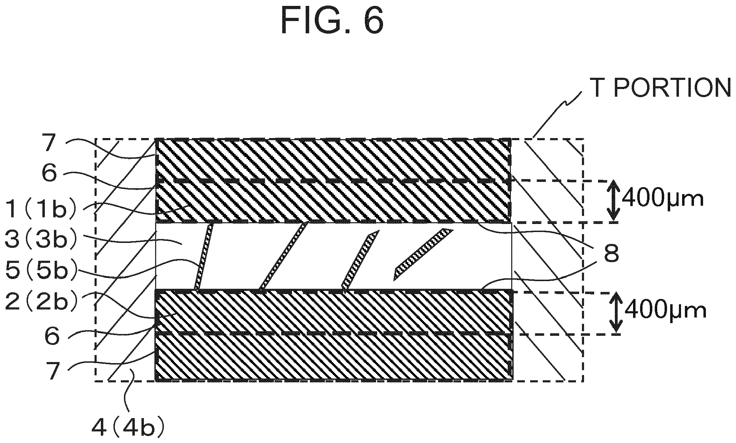

Note that, in the drawings, notations using numbers and letters are attached for identification. In the following explanation, however, only numbers will be attached except at the descriptions concerning only the ceramic bonded bodies shown in FIG. 1 to FIG. 4. Hatching of the covering layer 4 is omitted in FIG. 5, and hatching of the joining layer 3 is omitted in FIG. 6.

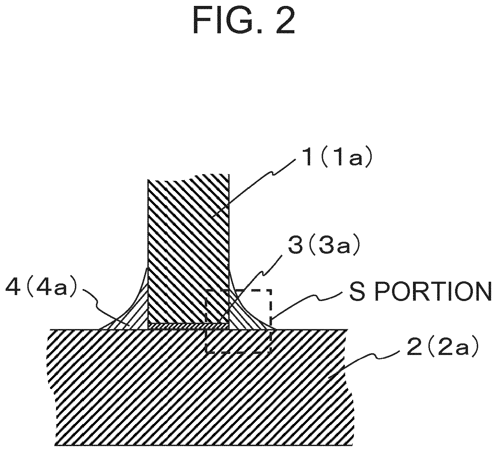

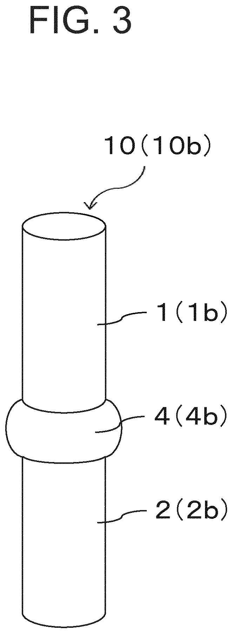

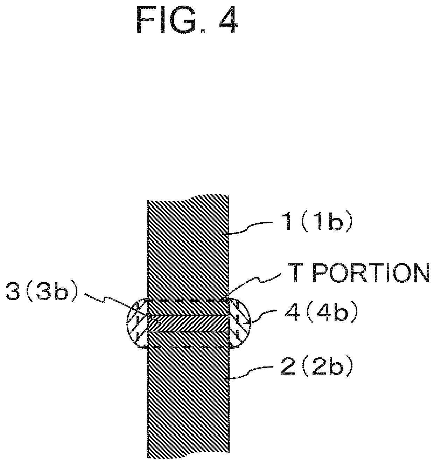

A ceramic bonded body 10 of the present disclosure, as shown in FIG. 1 to FIG. 4, is provided with a first member 1, a second member 2, a joining layer 3 positioned between the first member 1 and the second member 2, and a covering layer which covers the joining layer 3 and is positioned over the first member 1 and the second member 2. Further, FIG. 1 and FIG.2 show an example in which the first member 1a is columnar in shape and the second member 2a is a flat plate in shape. On the other hand, FIG. 3 and FIG. 4 show an example in which both of the first member 1b and second member 2b are columnar in shape. Note that, the first member and second member 2 are not limited to columnar shapes and flat plate shapes and may be cylindrical shapes, square pole shapes, or any other shapes.

Further, in the ceramic bonded body 10 of the present disclosure, the first member and second member are comprised of an aluminum nitride-based ceramic. Here, an "aluminum nitride-based ceramic" means a ceramic containing 75 mass% or more of aluminum nitride in the 100 mass% of all of constituents configuring the aluminum nitride-based ceramic.

Further, the material of the first member and second member can be confirmed according to the following method. First, an X-ray diffraction device (XRD) is used for measurement to obtain 2θ (2θ is the diffraction angle). From this value, JCPDS card is used to identify the material to thereby confirm the presence of aluminum nitride. Next, an ICP (inductively coupled plasma) emission spectrophotometer (ICP) is used for quantitative analysis of aluminum (Al) . Further, if the content of aluminum nitride (AlN) obtained by conversion from the content of the aluminum measured by the ICP is 75 mass% or more, the material is an aluminum nitride-based ceramic. Note that, in the measurement using the XRD, if the presence of a nitride other than aluminum nitride is not confirmed, a nitrogen analyzing device may also used to measure the content of nitrogen and this nitrogen may be converted to aluminum nitride to calculate the content of aluminum nitride.

Further, in the ceramic bonded body 10 of the present disclosure, the joining layer 3 and covering layer 4 contain at least aluminum, calcium, yttrium, and oxygen. In 100 mass% of all of constituents configuring the joining layer 3 and covering layer 4, each contains 21 mass% or more of aluminum converted to oxides, 21 mass% or more of calcium converted to oxides, and 86 mass% or more of aluminum and calcium in total converted to oxides . Further, the covering layer 4 is larger in the content of yttrium converted to oxides than the joining layer 3.

First, in the ceramic bonded body 10 of the present disclosure, the joining layer 3 and covering layer 4 contain aluminum and calcium in the amounts described above converted to oxides, therefore the joining strength of the first member 1 and the second member 2 becomes higher. In the relationships of the contents of yttrium converted to oxides in the joining layer 3 and the covering layer 4, specifically, for example, at the time when the content of yttrium converted to oxides in the joining layer 3 is A mass%, the content of it in the covering layer 4 is A+α mass% (joining layer 3 < covering layer 4), therefore the corrosion resistance in an environment exposed to highly corrosive gases or the like becomes higher than that at the time when the content in the covering layer 4 is A mass% (joining layer 3 = covering layer 4) or the time when the content in the covering layer 4 is A-α mass% (joining layer 3 > covering layer 4) . For this reason, the joining strength is maintained, therefore the ceramic bonded body 10 of the present disclosure is provided with both excellent durability and corrosion resistance.

Here, the contents of the constituents converted to oxides in the joining layer 3 and covering layer 4 may be calculated by the following method. First, the ceramic bonded body 10 is cut so as to obtain a cross-sectional shape as shown in FIG. 2 or FIG. 4, then the cut surface is polished to a mirror surface by using diamond abrasive grains or another polishing agent. Next, in the joining layer 3 and covering layer 4 at this mirror surface, an electron beam microanalyzer (EPMA) is used to emit an electron beam and measure the contents of aluminum, calcium, and yttrium. Here, the content of each constituent in the joining layer 3 may be calculated from the mean value obtained by measuring ranges of areas of for example 2000 µm² (length in horizontal direction of 200 µm and length in vertical direction of 10 µm) at least at five locations in the joining layer 3. On the other hand, the content of each constituent in the covering layer 4 may be calculated from the mean value obtained by measuring ranges of areas of for example 22500 µm² (length in horizontal direction of 150 µm and length in vertical direction of 150 µm) at least at two locations in the covering layer 4.

In this way, according to the above measurement, it is possible to confirm that the joining layer 3 and covering layer 4 contain aluminum, calcium, yttrium, and oxygen. Further, the contents of the aluminum, calcium, and yttrium converted to oxides may be calculated by converting the contents of the constituents measured by EPMA to aluminum oxide (Al₂O₃), calcium oxide (CaO), and yttrium oxide (Y₂O₃).

Further, when it is possible to obtain samples of the joining layer 3 and covering layer 4 from the ceramic bonded body 10, it is possible to measure the samples obtained from the joining layer 3 and covering layer 4 by ICP to thereby measure the contents of aluminum, calcium, and yttrium in the joining layer 3 and covering layer 4 and to convert them to oxides.

Further, in the ceramic bonded body 10 of the present disclosure, when the covering layer 4 contains 3 mass% or more of yttrium converted to oxides in the 100 mass% of all of the constituents configuring the covering layer 4, the corrosion resistance of the covering layer 4 is improved more than when the content of yttrium converted to oxides is less than 3 mass%. Accordingly, if such a configuration is obtained, the ceramic bonded body 10 of the present disclosure is kept from falling in joining strength when used in an environment exposed to highly corrosive gases or the like.

Further, in the ceramic bonded body 10 of the present disclosure, as shown in FIG. 5, at the cross-section along the thickness direction of the joining layer 3 (below, referred to as "the cross-section"), yttrium segregation phases 5 having aspect ratios not less than 8 may be provided in the covering layer 4 as well. Here, the "yttrium segregation phases 5 in the covering layer 4" means phases that contain relatively larger amounts of yttrium than the other portions in the covering layer 4 and have aspect ratios not less than 8. Note that, "contain relatively larger amounts of yttrium" means that larger amounts of yttrium than the mean value of contents of yttrium in the other parts of the covering layer 4 are contained.

Further, the "aspect ratio" is the value when dividing the length of the major axis of an yttrium segregation phase 5 by the length of the minor axis of the same in the cross-section as shown in FIG. 5. The "length of the major axis" is the greatest length of the line segment when drawing a straight line so as to pass through the yttrium segregation phase 5 and measuring the length of the line segment between the two locations at which this straight line crosses the outer edges of the yttrium segregation phase 5. The "length of the minor axis" is the length of a line segment between the two locations at which a straight line crosses the outer edges of the yttrium segregation phase 5 when drawing this straight line so as to be perpendicular to the line segment of the major axis at the center of the line segment of the major axis.

Further, if such configuration is satisfied, even if a crack is formed in the covering layer 4, this crack can be kept from advancing to the joining layer 3, therefore the joining strength of the ceramic bonded body 10 of the present disclosure can be improved. The yttrium segregation phases 5 in the covering layer 4 are relatively lower in strength in comparison with the portions other than the yttrium segregation phases 5. Therefore, when a crack is formed in the covering layer 4, it is formed in the yttrium segregation phases 5. Further, when a crack is formed, that crack advances in a longitudinal direction of the yttrium segregation phases 5 due to the thin long shape of the phases. At this time, the destructive energy of the crack is consumed inside the yttrium segregation phases 5, and the portions other than the yttrium segregation phases 5 have a relatively higher strength, therefore the crack is kept from advancing, so the crack can be kept from advancing to the joining layer 3.

Here, whether there are yttrium segregation phases 5 present in the covering layer 4 may be confirmed by the following method. First, the ceramic bonded body 10 is cut so as to obtain a cross-sectional shape as shown in FIG. 2 or FIG. 4, then the cut surface is worked to a mirror surface by using diamond abrasive grains or another polishing agent. Next, the covering layer 4 at this mirror surface is observed by using a scanning type electron microscope (SEM) and a photograph of the reflected electron image is captured. In this photograph, a phase having a tone closer to white than the other portions is a phase having a relatively larger content of yttrium. Note that, the content of yttrium of the phase having a tone close to white may be confirmed by firing an electron beam by EPMA.

Next, in this photograph, phases having a tone close to white as described above were traced and colored black. Further, by using the image obtained here, image analysis is carried out by applying a technique called "particle analysis" by the image analyzing software "Azokun" (®, made by Asahi Kasei Engineering Corp. When describing the image analyzing software "Azokun" in the following description, this indicates the image analyzing software made by Asahi Kasei Engineering Corp.). Note that, as the analysis conditions of "Azokun", for example, the lightness of particles may be set "Dark", the method of binarization may be set "Automatic", and shading may be made "Present" . By this image analysis, the length of the major axis and the length of the minor axis of the phase having a tone close to white are calculated. Therefore, by dividing the length of the major axis by the length of the minor axis, the aspect ratio is calculated. Further, among phases having tones close to white, phases having aspect ratios not less than 8 are the yttrium segregation phases 5.

Further, in the ceramic bonded body 10 of the present disclosure, when the area ratio occupied by the yttrium segregation phases 5 in the covering layer 4 is 5% to 30%, even if a crack is formed in the covering layer 4, it becomes easier to stop the advance of this crack by the yttrium segregation phases 5, therefore the joining strength of the ceramic bonded body 10 of the present disclosure can be further improved.

Here, the area ratio occupied by the yttrium segregation phases 5 can be measured by the following method. First, according to the method explained above, in the photograph of the reflected electron image on the covering layer 4 obtained by working the covering layer 4 to a mirror surface and capturing the image by the SEM, yttrium segregation phases 5 were traced and colored black. By using the image obtained here, the area ratio can be found by analyzing the image by applying the technique called "particle analysis" by the image analyzing software "Azokun".

Further, in the ceramic bonded body 10 of the present disclosure, as shown in FIG. 6, on the cross-section, yttrium segregation phases 5 having aspect ratios not less than 8 may be provided in the joining layer 3 as well. Here, "the yttrium segregation phases 5 in the joining layer 3" means phases that contain relatively larger amounts of yttrium than the other portions in the joining layer 3 and have aspect ratios not less than 8. Note that, "contain relatively larger amounts of yttrium" means containing larger amounts of yttrium than the mean value of contents of yttrium in the joining layer 3.

Further, if such a configuration is satisfied, even if a crack advances up to the joining layer 3, further advance of the crack can be suppressed by the yttrium segregation phases 5 in the joining layer 3, therefore the joining strength of the ceramic bonded body 10 of the present disclosure can be improved.

Here, whether the yttrium segregation phases 5 are present in the joining layer 3 can be confirmed by applying the method for confirming the presence of the yttrium segregation phases 5 in the covering layer 4 explained above to the joining layer 3.

Further, in the joining layer 3 in the ceramic bonded body 10 of the present disclosure, when the yttrium segregation phases 5 contact both of the first member 1 and the second member 2, it becomes easier to stop the advance of a crack in the joining layer 3 by the yttrium segregation phases 5, therefore the joining strength of the ceramic bonded body 10 of the present disclosure can be further improved.

Further, in the ceramic bonded body 10 of the present disclosure, at least one of the first member 1 or the second member 2 contains calcium. As shown in FIG. 6, the content of calcium converted to oxides in a first region 6 up to less than 400 µm from the interface 8 with the joining layer 3 may be larger than the content of calcium converted to oxides in a second region 7 400 µm or more from the interface 8. Here, for example, "a second region 7 400 µm or more from the interface 8 at the first member 1" means, in other words, the part excluding the first region 6 in the first member 1. Note that, FIG. 6 is an enlarged diagram at the T-portion shown in FIG. 4, therefore just one portion of the second region 7 is shown in FIG. 6.

Further, for example, if the first member 1 in the ceramic bonded body 10 of the present disclosure satisfies such a configuration, the first member 1 maintains excellent corrosion resistance while the chemical affinity with the joining layer 3 is improved due to the calcium contained in the first region 6, therefore the first member 1 and the joining layer 3 are strongly joined. The same is true also concerning the second member 2. Further, if both of the first member 1 and the second member 2 satisfy the configuration explained above, the joining strength of the ceramic bonded body 10 of the present disclosure can be further improved.

Here, if the content of calcium in the first region 6 is larger by 0.1 mass% or more than the content of calcium converted to oxides in the second region 7, the ceramic bonded body 10 of the present disclosure becomes more excellent in durability. Note that, the content of calcium converted to oxides in the first region 6 is for example 0.3 mass% to 1 mass%.

Further, in the ceramic bonded body 10 of the present disclosure, at least one of the first member 1 or second member 2 contains yttrium. The content of yttrium converted to oxides in the first region 6 may be smaller than the content of yttrium converted to oxides in the second region 7. If such a configuration is satisfied, a difference of thermal expansion between the first region 6 and the second region 7 due to the difference of content of calcium can be reduced. Therefore, the durability of the ceramic bonded body 10 of the present disclosure in a high temperature environment can be improved.

Here, the content of yttrium converted to oxides in the first region 6 may be smaller by 0.3 mass% or more than the content of yttrium converted to oxides in the second region 7. Note that, the content of yttrium converted to oxides in the first region 6 is for example 0.2 mass% or less, and the content of yttrium converted to oxides in the second region 7 is for example 0.5 mass% to 3 mass%.

Here, the contents of calcium and yttrium converted to oxides in the first regions 6 and second regions 7 may be calculated by the following method. First, the ceramic bonded body 10 is cut so as to obtain a cross-sectional shape as shown in FIG. 2 or 4, then the cut surface is polished to a mirror surface by using diamond abrasive grains or another polishing agent. Next, on this mirror surface, the first regions 6 and second regions 7 in the first member 1 and second member 2 are irradiated by an electron beam by EPMA and the contents of the constituents are measured. Here, the content of each constituent in the first region 6 may be calculated from the mean value obtained by measuring ranges of areas of for example 40,000 µm² (length in horizontal direction of 200 pm and length in vertical direction of 200 µm) at least at three locations in the first region 6. On the other hand, the content of each constituent in the second region 7 may be calculated the mean value obtained by measuring ranges of areas of for example 40000 µm² (length in horizontal direction of 200 µm and length in vertical direction of 200 µm) at least at 10 locations in the second region 7. Further, by converting the contents of the constituents calculated to calcium oxide (CaO) and yttrium oxide (Y₂O₃), the contents converted to oxides of the constituents may be calculated.

Next, an example of the method for manufacturing the ceramic bonded body 10 of the present disclosure will be explained.

First, the first member 1 and second member 2 comprised of aluminum nitride-based ceramic are fabricated by the following method. First, a slurry obtained by mixing aluminum nitride powder, a sintering aid, binder, and solvent is spray dried by a spray drying method to prepare granules. Next, the obtained granules are filled in a mold, then pressed to prepare shaped members. Note that, the shaped members may also be prepared by preparing green sheets by the doctor blade method using a slurry, forming them into desired shapes by dies or a laser, then stacking them.

Next, the shaped members are dried and degreased. After that, they are held in a nitrogen gas atmosphere at 1700°C to 2000°C in temperature to fire them and thereby obtaining the first member 1 and second member 2 comprised of aluminum nitride-based ceramic.

Here, in order to obtain a first member 1 and second member 2 containing calcium in which the content of calcium converted to oxides in the first region 6 up to less than 400 µm from the interface 8 with the joining layer 3 is larger than the content of calcium converted to oxides in the second region 7 400 µm or more from the interface 8, the first member 1 and second member 2 may be prepared by the following method.

First, when preparing the slurry explained above, use is made of calcium carbonate powder as the sintering aid. Next, green sheets are prepared by the doctor blade method using this slurry. At this time, as the green sheets, two types of green sheets A and B changed in ratios of calcium carbonate powder are prepared. The green sheets A are given a ratio of calcium carbonate powder relatively larger than that in the green sheets B. Further, these green sheets A and B are rendered into the desired shapes by dies or laser, then are stacked to thereby prepare the shaped members so that the regions from the interface 8 with the joining layer 3 up to 400 µm are configured by the green sheets A and the parts other than these are configured by the green sheets B after firing. After that, they may be dried and degreased then fired under the firing conditions explained above.

Further, in order to obtain a first member 1 and second member 2 containing yttrium in which the content of yttrium converted to oxides in the first region 6 is smaller than the content of yttrium converted to oxides in the second region 7, in the manufacturing method explained above, use may be made of a yttrium oxide powder other than the calcium carbonate powder as the sintering aid and the green sheet A may be given a ratio of yttrium oxide powder relatively smaller than that in the green sheets B.

Next, the joining surface of either of the first member 1 and second member 2 is coated by a first paste which becomes the joining layer 3 (for example, an organic solvent containing aluminum oxide (Al₂O₃) powder, calcium carbonate (CaCo₃) powder, yttrium oxide (Y₂O₃) powder, and an acrylic binder), then the joining surfaces are aligned and pressed from a direction perpendicular to the joining surfaces. Here, the amounts of the powders of the aluminum oxide powder, calcium carbonate powder, yttrium oxide powder, and other powders (for example silicon oxide powder) in the first paste are adjusted so that, in 100 mass% of all of the constituents configuring the joining layer, aluminum becomes 21 mass% or more converted to oxides, calcium becomes 21 mass% or more converted to oxides, and the sum of aluminum and calcium converted to oxides becomes 86 mass% or more. Note that, in the pressing, the operation may be carried out according to dead weights of the members to be joined as well.

Next, in the pressed state, a second paste which becomes the covering layer 4 (for example, an organic solvent containing an aluminum oxide powder, calcium carbonate powder, yttrium oxide powder, and acrylic binder) is coated so as to cover the surface of the coated first paste and extend over the surfaces of the first member 1 and second member 2 and is dried by holding it at a holding temperature of 100°C to 150°C and a holding time of 0.2 hour to 5 hours. Here, the second paste is made one with a ratio of yttrium oxide powder made larger than that in the first paste, but satisfying the above ratios of the aluminum oxide powder and calcium carbonate powder in the first paste. Note that, in the second paste, by controlling the yttrium oxide powder to 3 mass% or more in 100 mass% of the aluminum oxide powder, calcium carbonate powder, yttrium oxide powder, and other powders (for example silicon oxide powder or the like) in total, the covering layer 4 becomes one containing 3 mass% or more of yttrium converted to oxides in 100 mass% of all of the constituents configuring the covering layer 4.

Further, in order to make the covering layer 4 contain the yttrium segregation phases 5, in place of the second paste explained above, a third paste may be used. This third paste is prepared by the following method. First, a second paste reduced in the amount of binder to about a half is sprayed to the top of a rotating disk made of an oil repellent resin and is made to dry to thereby obtain granulated powder having an aspect ratio not less than 8. Further, this granulated powder and the first paste are mixed to prepare the third paste. Here, the granulated powder in the third paste dissolves in the organic solvent, but remains as phases substantially maintaining the shapes of the granulated powder. These become the yttrium segregation phases 5. Note that, at the preparation of the third paste, by adjusting the ratios of the granulated powder and the first paste, the area ratio occupied by the yttrium segregation phases 5 in the covering layer 4 can be controlled to any value.

Further, in order to make the joining layer 3 contain the yttrium segregation phases 5, in place of the first paste explained above, use may be made of a fourth paste. This fourth paste is prepared by the following method. First, the first paste reduced in the amount of binder to about a half is sprayed to the top of a rotating disk made of an oil repellent resin and is made to dry to thereby obtain granulated powder having an aspect ratio not less than 8. Further, this granulated powder and the first paste are mixed to prepare the fourth paste. Here, the granulated powder in the fourth paste dissolves in the organic solvent, but remains as phases substantially maintaining the shapes of the granulated powder. These become the yttrium segregation phases 5.

Further, rather than preparing the fourth paste and coating this on the joining surface of either of the first member and the second member, if sprinkling the granulated powder explained above on the joining surface, then coating the first paste so that this granulated powder is exposed, yttrium segregation phases 5 contacting both of the first member and the second member can be obtained in the joining layer 3.

Further, after drying, by heat treatment in a nitrogen gas atmosphere at a holding temperature of 1400°C to 1570°C and a holding time of 0.2 hour to 5 hours, the ceramic bonded body 10 of the present disclosure can be obtained.

### Example 1

The first member and second member made of aluminum nitride-based ceramic were prepared by the following method. First, a slurry obtained by mixing the aluminum nitride powder, sintering aid, binder, and solvent was spray dried by the spray drying method to prepare granules. As the sintering aid, use was made of powder mixture of yttrium oxide powder and calcium carbonate powder. Note that, the blending rates of the aluminum nitride powder and sintering aid were made ones so that the aluminum nitride powder became 94 mass%, the yttrium oxide powder became 5.8 mass%, and the calcium carbonate powder became 0.2 mass%. Next, the obtained granules were filled in a mold and then pressed to thereby prepare shaped members. After that, the shaped members were degreased and held in a nitrogen gas atmosphere at 1750°C in temperature for 3 hours to fire them and thereby obtain the first member and second member made of aluminum nitride-based ceramic. Note that, the first member was formed in a columnar shape having a diameter of 26 mm and length of 70 mm, and the second member was formed in a flat plate shape of 60 mm × 50 mm × 7 mm.

Next, the first paste for forming the joining layer and the second paste for forming the covering layer were prepared. The first paste and second paste were prepared by adjusting the amounts of powders of aluminum oxide powder, calcium carbonate powder, and yttrium oxide powder so as to give compositions of the joining layer and covering layer shown in Table 1 and adding 7 parts by mass of an organic solvent comprised of terpineol and 10 parts by mass of a binder comprised of acryl resin to 100 parts by mass of the total of these powders.

Next, the end face of the first member which becomes the joining surface was coated with the first paste so that the thickness of the joining layer becomes 50 µm, then was placed on the second member and pressed from a direction perpendicular to the joining surfaces. Further, in the pressed state, the second paste was coated so as to cover the surface of the coated first paste and extend over the surfaces of the first member and second member and was dried by setting the holding temperature at 120°C and holding time to 2 hours. Further, after drying, heat treatment was performed in a nitrogen gas atmosphere by a holding temperature of 1510°C and holding time of 2 hours to obtain samples.

Next, the joining strengths of the samples were measured. First, the second member of each sample was fixed by a jig. In that state, a load in a direction parallel to the joining surfaces was applied to the end part of the first member on the side where it is not joined. Further, the load was increased with time, and a joining strength M1 at the time when the first member was peeled off from the second member was measured.

Next, other samples prepared according to the method explained above were subjected to corrosion resistance tests. First, each sample was set in a reactive ion etching apparatus. SF₆ gas was introduced into this apparatus, and the pressure inside the apparatus was held at 10 Pa. Further, plasma was generated by a high frequency of 13.56 MHz and 1 kW, and the sample was made contact the plasma for 3 hours. Note that, the temperature of each sample was set so as to become room temperature (25°C). After that, a joining strength M2 of each sample was measured by the method of measuring the joining strength M1 explained above.

Further, from the joining strength M1 before the corrosion resistance test and the joining strength M2 after the corrosion resistance test, a drop in joining strength ΔM=(M1-M2)/M1×100 (%) was calculated. The results are shown in Table 1.

**Table 1**

| Sample no. | Joining layer (mass%) | | | | Coating layer (mass%) | | | | Joining strength M1 (MPa) | Joining strength M2 (MPa) | Drop in joining strength ΔM (%) |
|---|---|---|---|---|---|---|---|---|---|---|---|
| | Al₂O₃ | CaO | Al₂O₃ +CaO | Y₂O₃ | Al₂O₃ | CaO | Al₂O₃ +CaO | Y₂O₃ | | | |
| 1 | 20 | 79 | 99 | 1 | 21 | 77 | 98 | 2 | 213 | 177 | 17 |
| 2 | 21 | 78 | 99 | 1 | 20 | 78 | 98 | 2 | 216 | 179 | 17 |
| 3 | 21 | 78 | 99 | 1 | 21 | 77 | 98 | 2 | 232 | 190 | 18 |
| 4 | 30 | 69 | 99 | 1 | 30 | 68 | 98 | 2 | 235 | 195 | 17 |
| 5 | 40 | 59 | 99 | 1 | 40 | 58 | 98 | 2 | 240 | 202 | 16 |
| 6 | 50 | 49 | 99 | 1 | 50 | 48 | 98 | 2 | 241 | 202 | 16 |
| 7 | 60 | 39 | 99 | 1 | 60 | 38 | 98 | 2 | 239 | 198 | 17 |
| 8 | 78 | 21 | 99 | 1 | 77 | 21 | 98 | 2 | 238 | 195 | 18 |
| 9 | 50 | 49 | 99 | 1 | 43 | 43 | 86 | 14 | 235 | 212 | 10 |
| 10 | 79 | 20 | 99 | 1 | 77 | 21 | 98 | 2 | 219 | 180 | 18 |
| 11 | 78 | 21 | 99 | 1 | 78 | 20 | 98 | 2 | 217 | 178 | 18 |
| 12 | 40 | 59 | 99 | 1 | 40 | 59 | 99 | 1 | 240 | 190 | 21 |
| 13 | 44 | 40 | 84 | 16 | 43 | 43 | 86 | 14 | 204 | 184 | 10 |
| 14 | 44 | 42 | 86 | 14 | 41 | 43 | 84 | 16 | 206 | 185 | 10 |

The examples 1, 2, 10, 11, 12, 13 and 14 are comparative examples.

From the results shown in Table 1, in each of Sample Nos. 1, 2, 10, and 11 with a content of aluminum or calcium converted to oxides of 20 mass% in the joining layer or covering layer, the joining strength M1 was a low one of 219 MPa or less. Further, in each of Sample Nos. 13 and 14 in which the sum of the contents of aluminum and calcium converted to oxides was 84 mass% in the joining layer or covering layer, the joining strength M1 was a low one of 216 MPa or less. On the other hand, in each of Sample Nos. 3 to 9 and 12, the joining strength M1 was a high 230 MPa or more.

Further, when comparing Sample Nos. 5 and 12, the drop in joining strength ΔM was lower in Sample No. 5 in which the joining layer was smaller than the covering layer in the relationship of the contents of yttrium converted to oxides between the joining layer and the covering layer than in Sample No. 12 in which the joining layer was equal to the covering layer in the above relationship of the contents of yttrium converted to oxides.

In this way, it was learned that a ceramic bonded body satisfying a configuration such as in Sample Nos. 3 to 9 in which the joining layer and covering layer contained at least aluminum, calcium, yttrium, and oxygen, the aluminum was 21 mass% or more converted to oxides, the calcium was 21 mass% or more converted to oxides, and the sum of aluminum and calcium was 86 mass% or more converted to oxides based on 100 mass% of all of the constituents configuring each of the joining layer and the covering layer, and the content of yttrium converted to oxides in the covering layer was larger than that in the joining layer was provided with excellent durability and corrosion resistance together.

### Example 2

Next, samples with different contents of yttrium converted to oxides in the covering layers were prepared and evaluated for durability and corrosion resistance. Note that, the method of preparation was the same as the method of preparation of Sample No. 5 in Example 1 except that the ratios of the aluminum oxide powder, calcium carbonate powder, and yttrium oxide powder were adjusted so that the contents of oxides of yttrium in the covering layers became as shown in Table 2. Sample No. 15 is a sample the same as Sample No. 5 in Example 1.

Further, in the same way as Example 1, the joining strengths M1 and M2 were measured and the drops in joining strength ΔM were measured. The results are shown in Table 2.

**Table 2**

| Sample no. | Coating layer (mass%) | | | | Joining strength M1 (MPa) | Joining strength M2 (MPa) | Drop in joining strength ΔM (%) |
|---|---|---|---|---|---|---|---|
| | Al₂O₃ | CaO | Al₂O₃ +CaO | Y₂O₃ | | | |
| 15 | 40 | 58 | 98 | 2 | 240 | 202 | 16 |
| 16 | 39 | 58 | 97 | 3 | 238 | 207 | 13 |
| 17 | 37 | 55 | 92 | 8 | 237 | 211 | 11 |
| 18 | 35 | 51 | 86 | 14 | 234 | 213 | 9 |

From the results shown in Table 2, in each of Sample Nos. 16 to 18, the drop in joining strength ΔM was a low 13% or less. It was seen from these results that a ceramic bonded body containing 3 mass% or more of yttrium converted to oxides in the covering layer has further excellent corrosion resistance.

### Example 3

Next, samples in which the covering layers had yttrium segregation phases 5 and the area ratios occupied by the yttrium segregation phases 5 were different were prepared and evaluated for durability and corrosion resistance. Note that, the method of preparation was the same as the method of preparation of Sample No. 16 in Example 2 except that the covering layers were formed by using a third paste which will be explained later in place of the second paste.

The third paste was prepared by the following method. First, the second paste of Sample No. 16 in Example 2 halved in the binder comprised of acrylic resin was sprayed to the top of a rotating disk made of an oil repellent resin and made to dry to obtain a granulated powder having an aspect ratio not less than 8. Further, the granulated powders and first paste were adjusted in ratios and mixed so that the area ratios occupied by the yttrium segregation phases 5 became the values as shown in Table 3 to prepare the third paste. Here, the amounts of powders of the first paste were adjusted so that the compositions of the covering layers in the samples became the same as the composition of the covering layer in Sample No. 16 in Example 2.

Next, the area ratios occupied by the yttrium segregation phases in the covering layers in the samples were calculated by the following method. First, each sample was cut so as to obtain a cross-sectional shape as shown in FIG. 1(b), then the cut surface was polished to a mirror surface by using diamond abrasive grains or another polishing agent. Next, by using an SEM, the covering layer on this mirror surface was observed and a photograph of the reflected electron image was obtained. Further, in this photograph, phases having tones closer to white than the other portions were traced and colored black. Next, by using the image obtained here, image analysis was carried out by applying a technique called "particle analysis" by the image analyzing software "Azokun" to calculate aspect ratios of the phases having tones closer to white. Phases in which the calculated aspect ratios are 8 or more are yttrium segregation phases. Therefore, by using the images obtained by tracing only the yttrium segregation phases and coloring them black, image analysis was carried out by particle analysis by the image analyzing software "Azokun" to calculate the area ratio occupied by the yttrium segregation phases in the covering layer.

Further, in the same way as Example 1, the joining strengths M1 and M2 were measured and the drops in joining strength ΔM were calculated. As a result, the joining strengths M1 of the samples were different, but the drops in joining strength ΔM of the samples were all 13%. The results will be shown in Table 3. Note that, in Table 3, for comparison, the Sample No. 16 in Example 2 not having yttrium segregation phases in the covering layer is described as Sample No. 19.

**Table 3**

| Sample no. | Area ratio (%) occupied by yttrium segregation phases in covering layer | Joining strength M1 (MPa) |
|---|---|---|
| 19 | 0 | 238 |
| 20 | 5 | 258 |
| 21 | 15 | 260 |
| 22 | 30 | 257 |
| 23 | 32 | 249 |

From the results shown in Table 3, in contrast to Sample No. 19 in which the joining strength M1 was 238 MPa, the joining strengths M1 in Sample Nos. 20 to 23 were 249 MPa or more, therefore it was learned that a ceramic bonded body having yttrium segregation phases in the covering layer have more excellent durability.

Further, among Sample Nos. 20 to 23, the joining strengths M1 of Sample Nos. 20 to 22 were 257 MPa or more, therefore it was learned that a ceramic bonded body in which the area ratio occupied by the yttrium segregation phases in the covering layer was 5% to 30% had further excellent durability.

### Example 4

Next, Sample No. 25 having yttrium segregation phases in the joining layer was prepared and evaluated for durability and corrosion resistance. The method of preparation of Sample No. 25 is the same as the method of preparation for Sample No. 19 in Example 3 except that the joining layer was formed by using a fourth paste which will be explained later in place of the first paste.

The fourth paste was prepared by the following method. First, the first paste of Sample No. 19 in Example 3 halved in the binder comprised of acrylic resin was sprayed to the top of a rotating disk made of an oil repellent resin and made to dry to obtain a granulated powder having an aspect ratio not less than 8. Further, the granulated powders and the first paste were mixed to prepare the fourth paste.

Further, for comparison, Sample No 24 was prepared by exactly the same method as that for Sample No. 19 in Example 3.

Next, with respect to Sample Nos. 24 and 25, the method of measuring the area ratio occupied by the yttrium segregation phases in the covering layer in Example 1 was applied to the joining layer to confirm any yttrium segregation phases in the joining layer.

Further, in Sample Nos. 24 and 25, in the same way as Example 1, the joining strengths M1 and M2 were measured and the drops in joining strength ΔM were calculated. As a result, the joining strengths M1 in Sample Nos. 24 and 25 were different, but the drops in joining strength ΔM of Sample Nos. 24 and 25 were the same 13%. The results are shown in Table 4.

**Table 4**

| Sample No. | Any yttrium segregation phases in joining layer | Joining strength M1 (MPa) |
|---|---|---|
| 24 | Absent | 238 |
| 25 | Present | 260 |

From the results shown in Table 4, it was learned that in contrast to Sample No. 24 in which the joining strength M1 was 238 MPa, the joining strength M1 of Sample No. 25 was 260 MPa, therefore a ceramic bonded body having yttrium segregation phases in the joining layer had more excellent durability.

### Example 5

Next, Sample No. 27 having yttrium segregation phases contacting both of the first member and second member in the joining layer was prepared and evaluated for durability and corrosion resistance. Here, Sample No. 27 was prepared not by preparing the fourth paste by the method of preparation of Sample No. 25 in Example 4, but by sprinkling granulated powder prepared from the first paste on the end face forming the joining surface of the first member, then coating the first paste so that this granulated powder would be exposed.

Further, for comparison, Sample No. 26 was prepared by exactly the same method as that for Sample No. 25 in Example 4.

Next, with respect to Sample Nos. 26 and 27, the method of confirming any yttrium segregation phases in the joining layer in Example 4 was used to confirm any yttrium segregation phases contacting both of the first member and second member in the joining layer.

Further, in Sample Nos. 26 and 27, in the same way as Example 1, the joining strengths M1 and M2 were measured and the drops in joining strength ΔM were calculated. As a result, the joining strengths M1 were different between Sample Nos. 26 and 27, but the drops in joining strength ΔM of Sample Nos. 26 and 27 were the same 13%. The results are shown in Table 5.

**Table 5**

| Sample no. | Any yttrium segregation phases contacting both members | Joining strength M1 (MPa) |
|---|---|---|
| 26 | Absent | 260 |
| 27 | Present | 277 |

From the results shown in Table 5, it was learned that in contrast to Sample No. 26 in which the joining strength M1 was 260 MPa, the joining strength M1 of Sample No. 27 was 277 MPa, therefore a ceramic bonded body having yttrium segregation phases contacting both of the first member and second member had more excellent durability.

### Example 6

Next, samples in which the contents of calcium converted to oxides are different between the first region and the second region in both of the first member and second member were prepared and were evaluated for durabilities and corrosion resistances. Here, the method of preparation of the samples is the same as the method of preparation of Sample No. 25 in Example 4 except that the first members and second members were prepared by the following method.

First, a slurry obtained by mixing aluminum nitride powder, a sintering aid, a binder, and a solvent spray dried according to the spray drying method to prepare granules. For the sintering aid, use was made of a powder mixture of yttrium oxide powder and calcium carbonate powder.

Next, the doctor blade method using the slurry was used to prepare green sheets. Here, as the green sheets, two types of green sheets A and B changed in ratios of calcium carbonate powder were prepared. Specifically, the green sheets A and B were prepared by changing the ratios of the aluminum nitride powder, yttrium oxide powder, and calcium carbonate powder so that, after firing, the content of calcium becomes the content shown in Table 6 in terms of calcium oxide (CaO), the content of yttrium becomes 2.5 mass% in terms of yttrium oxide (YₐO₃), and the balance becomes aluminum nitride. Further, these green sheets A and B were worked by dies and stacked so that, after firing, the regions from the interface with the joining layer up to 400 µm were configured by the green sheets A and the parts other than these are configured by the green sheets B to thereby prepare the shaped members. After that, the shaped members were degreased and held in a nitrogen gas atmosphere at 1750°C in temperature for 3 hours to fire them and thereby obtain the first member and second member comprised of aluminum nitride-based ceramic.

Further, in the same way as Example 1, the joining strengths M1 and M2 were measured and the drop in joining strength ΔM were calculated. As a result, the joining strengths M1 were different among the samples, but the drops in joining strength ΔM of the samples were all the same 13%. The results are shown in Table 6.

**Table 6**

| Sample no. | Content (mass%) of calcium oxide | | Joining strength M1 (MPa) |
|---|---|---|---|
| | First region | Second region | |
| 28 | 0.4 | 0.4 | 260 |
| 29 | 1 | 0 | 273 |
| 30 | 0.3 | 0.2 | 271 |
| 31 | 0.21 | 0.43 | 254 |

From the results shown in Table 6, it was learned that in comparison with Sample Nos. 28 and 31, the joining strengths M1 of Sample Nos. 29 and 30 were high 271 MPa or more, therefore a ceramic bonded body with a content of calcium converted to oxides in the first region larger than the content of calcium converted to oxides in the second region had more excellent durability.

### Example 7

Next, samples in which the contents of yttrium converted to oxides are different between the first member and second member in both of the first member and second member were prepared and evaluated for durabilities. Here, the method of preparation of the samples is the same as the method of preparation of Sample No. 30 in Example 6 except that the ratios of the yttrium oxide powder were changed so that, after firing, the contents of yttrium in terms of yttrium oxide (Y₂O₃) became the contents as shown in Table 7.

Further, in the same way as Example 1, the joining strengths M1 were measured. As a result, the joining strengths M1 of the samples were all 271 MPa.

Next, other samples prepared according to the method explained above were subjected to the following corrosion resistance test. First, each sample was set in a reactive ion etching apparatus. SF₆ gas was introduced into this apparatus, and the pressure inside the apparatus was held at 10 Pa. Further, plasma was generated by a high frequency of 13.56 MHz and 1 kW, and the sample was made contact the plasma for 3 hours. Note that, the temperature of each sample was set so as to become 200°C. After that, a joining strength M3 of each sample was measured. The results are shown in Table 7.

**Table 7**

| Sample no. | Content (mass%) of yttrium oxide | | Joining strength M3 (MPa) |
|---|---|---|---|
| | First region | Second region | |
| 32 | 2.5 | 2.5 | 229 |
| 33 | 2.5 | 2.8 | 252 |
| 34 | 0.5 | 2 | 247 |
| 35 | 3 | 2.5 | 231 |

From the results shown in Table 7, it was learned that in comparison with Sample Nos. 32 and 35, the joining strengths M3 of Sample Nos. 33 and 34 were high 247 MPa or more, therefore, if the content of yttrium converted to oxides in the first region was smaller than the content of yttrium converted to oxides in the second region, more excellent durability was provided in a high temperature environment.

### Reference Signs List

1, 1a, 1b: first members
2, 2a, 2b: second members
3, 3a, 3b: joining layers
4, 4a, 4b: covering layers
5, 5a, 5b: yttrium segregation phases
6: first region
7: second region
8: interface
10, 10a, 10b: ceramic bonded bodies

## Claims

1. A ceramic bonded body (10, 10a, 10b) comprising:
a first member (1, 1a, 1b);
a second member (2, 2a, 2b);
a joining layer (3, 3a, 3b) between the first member (1, 1a, 1b) and the second member (2, 2a, 2b); and
a covering layer (4, 4a, 4b) covering the joining layer (3, 3a, 3b) and extending from the first member (1, 1a, 1b) to the second member (2, 2a, 2b), wherein
the first member (1, 1a, 1b) and the second member (2, 2a, 2b) each comprise aluminum nitride-based ceramic,
the joining layer (3, 3a, 3b) and the covering layer each contain aluminum, calcium, yttrium, and oxygen, and
in 100 mass% of all of the constituents in each of the joining layer (3, 3a, 3b) and the covering layer (4, 4a, 4b), the aluminum is 21 mass% or more in terms of an oxide, the calcium is 21 mass% or more in terms of an oxide, and the sum of the aluminum and the calcium in terms of oxides is 86 mass% or more, and
the covering layer (4, 4a, 4b) has a larger content of yttrium in terms of an oxide than the joining layer (3, 3a, 3b).

2. The ceramic bonded body (10, 10a, 10b) according to claim 1, wherein the covering layer (4, 4a, 4b) contains 3 mass% or more of the yttrium in terms of an oxide in 100 mass% of all of constituents in the covering layer (4, 4a, 4b).

3. The ceramic bonded body (10, 10a, 10b) according to claim 1 or 2, wherein the covering layer (4, 4a, 4b) comprises yttrium segregation phases (5, 5a, 5b) each having an aspect ratio of 8 or more in a cross-section along a thickness direction of the joining layer (3, 3a, 3b), wherein the yttrium segregation phases (5, 5a, 5b) are phases that contain relatively larger amounts of yttrium than the other portions in the covering layer (4, 4a, 4b) and have aspect ratios not less than 8.

4. The ceramic bonded body (10, 10a, 10b) according to claim 3, wherein an area ratio occupied by the yttrium segregation phases (5, 5a, 5b) in the covering layer (4, 4a, 4b) is 5% to 30%.

5. The ceramic bonded body (10, 10a, 10b) according to any one of claims 1 to 4, wherein the joining layer (3, 3a, 3b) comprises yttrium segregation phases (5, 5a, 5b) each having an aspect ratio of 8 or more in a cross-section along a thickness direction of the joining layer (3, 3a, 3b), wherein the yttrium segregation phases (5, 5a, 5b) are phases that contain relatively larger amounts of yttrium than the other portions in the joining layer (3, 3a, 3b) and have aspect ratios not less than 8.

6. The ceramic bonded body (10, 10a, 10b) according to claim 5, wherein at least one of the yttrium segregation phases (5, 5a, 5b) in the joining layer (3, 3a, 3b) is in contact with both of the first member (1, 1a, 1b) and the second member (2, 2a, 2b) .

7. The ceramic bonded body (10, 10a, 10b) according to any one of claims 1 to 6, wherein
at least one of the first member (1, 1a, 1b) and the second member (2, 2a, 2b) contains calcium, and
a content of calcium in terms of an oxide in a first region (6) from an interface (8) with the joining layer (3, 3a, 3b) up to less than 400 µm is larger than a content of calcium in terms of calcium oxide in a second region (7) from the interface (8) by 400 µm or more.

8. The ceramic bonded body (10, 10a, 10b) according to claim 7, wherein
at least one of the first member (1, 1a, 1b) and the second member (2, 2a, 2b) contains yttrium, and
a content of the yttrium in terms of an oxide in the first region (6) is smaller than a content of the yttrium in terms of an oxide in the second region (7).

## Patentansprüche

1. Keramischer verbundener Körper (10, 10a, 10b), aufweisend:
ein erstes Element (1, 1a, 1b),
ein zweites Element (2, 2a, 2b),
eine Verbindungsschicht (3, 3a, 3b) zwischen dem ersten Element (1, 1a, 1b) und dem zweiten Element (2, 2a, 2b) und
eine Deckschicht (4, 4a, 4b), die die Verbindungsschicht (3, 3a, 3b) bedeckt und sich von dem ersten Element (1, 1a, 1b) zum zweiten Element (2, 2a, 2b) erstreckt, wobei
das erste Element (1, 1a, 1b) und das zweite Element (2, 2a, 2b) jeweils eine aluminiumnitridbasierte Keramik aufweisen,
die Verbindungsschicht (3, 3a, 3b) und die Deckschicht jeweils Aluminium, Calcium, Yttrium und Sauerstoff enthalten, und
in 100 Masse-% aller Bestandteile in jeder von der Verbindungsschicht (3, 3a, 3b) und der Deckschicht (4, 4a, 4b) das Aluminium 21 Masse-% oder mehr in Bezug auf ein Oxid beträgt, das Calcium 21 Masse-% oder mehr in Bezug auf ein Oxid beträgt und die Summe des Aluminiums und des Calciums in Bezug auf Oxide 86 Masse-% oder mehr beträgt, und
die Deckschicht (4, 4a, 4b) einen größeren Gehalt an Yttrium in Bezug auf Oxid als die Verbindungsschicht (3, 3a, 3b) aufweist.

2. Keramischer verbundener Körper (10, 10a, 10b) gemäß Anspruch 1, wobei die Deckschicht (4, 4a, 4b) 3 Masse-% oder mehr des Yttriums in Bezug auf ein Oxid in 100 Masse-% aller Bestandteile in der Deckschicht (4, 4a, 4b) enthält.

3. Keramischer verbundener Körper (10, 10a, 10b) gemäß Anspruch 1 oder 2, wobei die Deckschicht (4, 4a, 4b) Yttrium-Segregationsphasen (5, 5a, 5b) aufweist, die jeweils ein Aspektverhältnis von 8 oder mehr in einem Querschnitt entlang einer Dickenrichtung der Verbindungsschicht (3, 3a, 3b) aufweisen, wobei die Yttrium-Segregationsphasen (5, 5a, 5b) Phasen sind, die relativ größere Mengen an Yttrium als die anderen Abschnitte in der Deckschicht (4, 4a, 4b) enthalten und Aspektverhältnisse von nicht weniger als 8 aufweisen.

4. Keramischer verbundener Körper (10, 10a, 10b) gemäß Anspruch 3, wobei ein Flächenverhältnis, das von den Yttrium-Segregationsphasen (5, 5a, 5b) in der Deckschicht (4, 4a, 4b) eingenommen wird, 5% bis 30 % beträgt.

5. Keramischer verbundener Körper (10, 10a, 10b) gemäß irgendeinem der Ansprüche 1 bis 4, wobei die Verbindungsschicht (3, 3a, 3b) Yttrium-Segregationsphasen (5, 5a, 5b) aufweist, die jeweils ein Aspektverhältnis von 8 oder mehr in einem Querschnitt entlang einer Dickenrichtung der Verbindungsschicht (3, 3a, 3b) haben, wobei die Yttrium-Segregationsphasen (5, 5a, 5b) Phasen sind, die relativ größere Mengen an Yttrium als die anderen Abschnitte in der Verbindungsschicht (3, 3a, 3b) enthalten und Aspektverhältnisse von nicht weniger als 8 aufweisen.

6. Keramischer verbundener Körper (10, 10a, 10b) gemäß Anspruch 5, wobei mindestens eine der Yttrium-Segregationsphasen (5, 5a, 5b) in der Verbindungsschicht (3, 3a, 3b) sowohl mit dem ersten Element (1, 1a, 1b) als auch mit dem zweiten Element (2, 2a, 2b) in Kontakt ist.

7. Keramischer verbundener Körper (10, 10a, 10b) gemäß irgendeinem der Ansprüche 1 bis 6, wobei
mindestens eines von dem ersten Element (1, 1a, 1b) und dem zweiten Element (2, 2a, 2b) Calcium enthält und
ein Gehalt an Calcium in Bezug auf ein Oxid in einem ersten Bereich (6) von einer Grenzfläche (8) mit der Verbindungsschicht (3, 3a, 3b) bis zu weniger als 400 µm größer als ein Gehalt an Calcium in Bezug auf Calciumoxid in einem zweiten Bereich (7) von der Grenzfläche (8) bei 400 µm oder mehr ist.

8. Keramischer verbundener Körper (10, 10a, 10b) gemäß Anspruch 7, wobei
mindestens eines von dem ersten Element (1, 1a, 1b) und dem zweiten Element (2, 2a, 2b) Yttrium enthält und
ein Gehalt des Yttriums in Bezug auf ein Oxid in dem ersten Bereich (6) kleiner als ein Gehalt des Yttriums in Bezug auf ein Oxid im zweiten Bereich (7) ist.

## Revendications

1. Corps lié en céramique (10, 10a, 10b), comprenant :
un premier élément (1, 1a, 1b) ;
un deuxième élément (2, 2a, 2b) ;
une couche de jonction (3, 3a, 3b) entre le premier élément (1, 1a, 1b) et le deuxième élément (2, 2a, 2b) ; et
une couche de recouvrement (4, 4a, 4b) recouvrant la couche de jonction (3, 3a, 3b) et s'étendant du premier élément (1, 1a, 1b) au deuxième élément (2, 2a, 2b), où
le premier élément (1, 1a, 1b) et le deuxième élément (2, 2a, 2b) comprennent chacun une céramique à base de nitrure d'aluminium,
la couche de jonction (3, 3a, 3b) et la couche de recouvrement contiennent chacune de l'aluminium, du calcium, de l'yttrium et de l'oxygène, et
dans 100 % en masse de tous les constituants dans chacune de la couche de jonction (3, 3a, 3b) et de la couche de couverture (4, 4a, 4b), l'aluminium représente 21 % en masse ou plus en termes d'oxyde, le calcium représente 21 % en masse ou plus en termes d'oxyde, et la somme de l'aluminium et du calcium en termes d'oxydes représente 86 % en masse ou plus, et
la couche de recouvrement (4, 4a, 4b) a une plus grande teneur en yttrium en termes d'oxyde que la couche de jonction (3, 3a, 3b).

2. Corps lié en céramique (10, 10a, 10b) selon la revendication 1, dans lequel la couche de recouvrement (4, 4a, 4b) contient 3 % en masse ou plus de l'yttrium en termes d'oxyde pour 100 % en masse de tous les constituants dans la couche de recouvrement (4, 4a, 4b).

3. Corps lié en céramique (10, 10a, 10b) selon la revendication 1 ou 2, dans lequel la couche de recouvrement (4, 4a, 4b) comprend des phases de ségrégation d'yttrium (5, 5a, 5b) ayant chacune un rapport d'aspect de 8 ou plus dans une section transversale le long d'une direction d'épaisseur de la couche de jonction (3, 3a, 3b), dans lequel les phases de ségrégation d'yttrium (5, 5a, 5b) sont des phases qui contiennent des quantités relativement plus importantes d'yttrium que les autres parties dans la couche de recouvrement (4, 4a, 4b) et ont des rapports d'aspect non inférieurs à 8.

4. Corps lié en céramique (10, 10a, 10b) selon la revendication 3, dans lequel un rapport de surface occupé par les phases de ségrégation d'yttrium (5, 5a, 5b) dans la couche de recouvrement (4, 4a, 4b) est de 5% à 30%.

5. Corps lié en céramique (10, 10a, 10b) selon l'une quelconque des revendications 1 à 4, dans lequel la couche de jonction (3, 3a, 3b) comprend des phases de ségrégation d'yttrium (5, 5a, 5b) ayant chacune un rapport d'aspect de 8 ou plus dans une section transversale le long d'une direction d'épaisseur de la couche de jonction (3, 3a, 3b), où les phases de ségrégation d'yttrium (5, 5a, 5b) sont des phases qui contiennent des quantités relativement plus importantes d'yttrium que les autres parties dans la couche de jonction (3, 3a, 3b) et ont des rapports d'aspect non inférieurs à 8.

6. Corps lié en céramique (10, 10a, 10b) selon la revendication 5, dans lequel au moins une des phases de ségrégation d'yttrium (5, 5a, 5b) dans la couche de jonction (3, 3a, 3b) est en contact à la fois avec le premier élément (1, 1a, 1b) et le deuxième élément (2, 2a, 2b).

7. Corps lié en céramique (10, 10a, 10b) selon l'une quelconque des revendications 1 à 6, dans lequel
au moins l'un du premier élément (1, 1a, 1b) et du deuxième élément (2, 2a, 2b) contient du calcium, et
une teneur en calcium en termes d'oxyde dans une première région (6) à partir d'une interface (8) avec la couche de jonction (3, 3a, 3b) jusqu'à moins de 400 µm est supérieure à une teneur en calcium en termes d'oxyde de calcium dans une deuxième région (7) à partir de l'interface (8) de 400 µm ou plus.

8. Corps lié en céramique (10, 10a, 10b) selon la revendication 7, dans lequel
au moins un du premier élément (1, 1a, 1b) et du deuxième élément (2, 2a, 2b) contient de l'yttrium, et
une teneur en yttrium en termes d'oxyde dans la première région (6) est inférieure à une teneur en yttrium en termes d'oxyde dans la deuxième région (7).
